# EUROPÄISCHE PATENTSCHRIFT

(11) **EP 1 672 291 B1**
(45) Veröffentlichungstag und Bekanntmachung des Hinweises auf die Patenterteilung: **11.05.2016**
(21) Anmeldenummer: 05027301.0
(22) Anmeldetag: 14.12.2005
(51) Int. Cl.: F24F 5/00, F24D 3/14

(54) **Klimaeinrichtung mit mindestens einem Klimaelement**
Air conditioning system with air conditioning element
Système de conditionnement d'air avec élément de climatisation

(30) Priorität: 17.12.2004 DE 102004060874
(43) Veröffentlichungstag der Anmeldung: 21.06.2006
(73) Patentinhaber: Kälberer, Stefan, 73344 Gruibingen (DE)
(72) Erfinder: Kälberer, Stefan, 73344 Gruibingen (DE)
(74) Vertreter: Jackisch-Kohl, Anna-Katharina

(56) Entgegenhaltungen:
- EP-A- 0 278 489
- WO-A-88/10402
- WO-A-03/093732
- DE-A1- 4 031 483
- DE-A1- 10 019 315
- DE-A1- 19 625 050
- JP-A- 59 225 228

## Beschreibung

Die Erfindung betrifft eine Klimaeinrichtung mit mindestens einem Klimaelement nach dem Oberbegriff des Anspruches 1.

Es sind Wandheizeinrichtungen bekannt, die im Nassverlegesystem errichtet werden. Hierbei werden Rohre auf einer Rohwand oder einem Trägerelement befestigt und anschließend mit Putz überzogen. In den Rohren strömt warmes Wasser, das den kompletten Putz erwärmt. Er gibt die Wärme in den Raum ab. Um Spannungsrisse im Putz zu vermeiden, sind nur niedrige Vorlauftemperaturen möglich.

Es sind auch Wandheizeinrichtungen bekannt, die im Trockenverlegesystem montiert werden. Hierbei sind die Rohre in eine Gipsfaserplatte integriert. Das durch die Rohre strömende warme Wasser erwärmt die Gipsfaserplatte, die ihrerseits die Wärme an den Raum abgibt. Da die Gipsfaserplatten nur eine begrenzte Dicke haben, können die Rohre nur einen kleinen Querschnitt haben. Er führt jedoch im Rohrsystem zu einem hohen Druckverlust.

Bei der bekannten Klimaeinrichtung (WO 03/093732 A) ist das Wärmeleitelement in die Vertiefungen des Wärmeisoliermaterials eingeklebt, so dass das Wärmeelement vom Abstrahlelement nicht mechanisch entkoppelt ist. Das Abstrahlelement ist als Laminat ausgebildet, das auf dem Rohr aufliegt.

Bei einer weiteren bekannten Klimaeinrichtung (DE 40 31 483 A1) liegt das vom Wärmemedium durchströmte Rohr zwischen dem Wärmeisoliermaterial und dem Abstrahlelement und hat von dessen einander zugewandten Seitenflächen jeweils Abstand. Die Wärmeisolierung und der Wärmeübergang zum Abstrahlelement sind darum nicht optimal; außerdem hat die Klimaeinrichtung dadurch eine entsprechende Dicke.

Der Erfindung liegt die Aufgabe zugrunde, die gattungsgemäße Klimaeinrichtung so auszubilden, dass sie auch bei großen Rohrquerschnitten keine große Dicke hat und dennoch der Wärmeübergang auf das Abstrahlelement sowie die Wärmeisolierung optimal sind.

Diese Aufgabe wird bei der gattungsgemäßen Klimaeinrichtung erfindungsgemäß mit den kennzeichnenden Merkmalen des Anspruches 1 gelöst.

Bei der erfindungsgemäßen Klimaeinrichtung ist das Rohr an der Rückseite des Abstrahlelementes gehalten, das eine Platte, beispielsweise eine Gipsfaserplatte, sein kann. Da das Rohr nicht im Abstrahlelement untergebracht ist, beschränkt die Dicke des Abstrahlelementes den Rohrquerschnitt nicht. Das Rohr kann darum mit einem ausreichend großen Strömungsquerschnitt versehen sein, so dass der Druckverlust gering ist. Da das Rohr in den Vertiefungen des Wärmeisoliermaterials liegt, hat das Klimaelement auch bei einem großen Rohrquerschnitt eine verhältnismäßig geringe Dicke. Zwischen dem Rohr und dem Abstrahlelement besteht ein guter Wärmeübergang. Da das Wärmeleitelement vom Abstrahlelement mechanisch entkoppelt ist, werden keine Spannungen auf das Abstrahlelement übertragen.

Die erfindungsgemäße Klimaeinrichtung kombiniert den Vorteil eines großen Leitungsquerschnittes mit dem eines als Einheit montierten Moduls mit einer integrierten Leitung. Dadurch wird die Montage der Klimaeinrichtung erheblich erleichtert.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in Vorderansicht eine erfindungsgemäße Klimaeinrichtung,
- Fig. 2: in vergrößerter Darstellung einen Schnitt längs der Linie A-B in Fig. 1,
- Fig. 3: in vergrößerter Darstellung einen Schnitt längs der Linie C-D in Fig. 1,
- Fig. 4: in Vorderansicht eine zweite Ausführungsform einer erfindungsgemäßen Klimaeinrichtung,
- Fig. 5: in vergrößerter Darstellung einen Schnitt längs der Linie A-B in Fig. 4,
- Fig. 6: in Vorderansicht eine dritte Ausführungsform einer erfindungsgemäßen Klimaeinrichtung,
- Fig. 7: einen Schnitt längs der Linie A-B in Fig. 6,
- Fig. 8: in Vorderansicht eine vierte Ausführungsform einer erfindungsgemäßen Heizeinrichtung,
- Fig. 9: einen Schnitt längs der Linie A-B in Fig. 8,
- Fig. 10: in einer Darstellung entsprechend Fig. 9 eine weitere Ausführungsform einer erfindungsgemäßen Klimaeinrichtung.

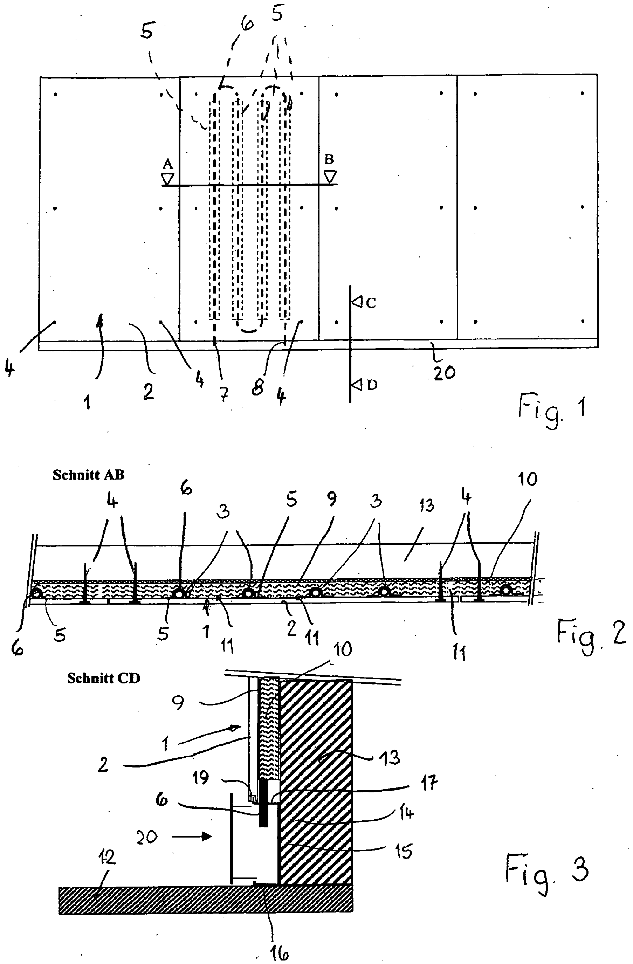

Die Klimaeinrichtung gemäß den Fig. 1 bis 3 hat ein Klimaelement 1, das eine Wandbeplankung 2, zum Beispiel eine Gipsfaserplatte, aufweist. Die Wandbeplankung 2 besteht aus gleichen, lückenlos aneinandergesetzten Elementen (Fig. 1), die eine durchgehende Außenwand der Klimaeinrichtung bilden. Das Klimaelement 1 ist vorzugsweise mit Schrauben 4 und dergleichen, die von der Außenseite der Wandbeplankung 2 aus eingesetzt werden, an einer Wandkonstruktion 13 befestigt. Wie Fig. 1 zeigt, sind diese Befestigungselemente 4 vorteilhaft gleichmäßig über die Fläche der Wandbeplankung 2 verteilt angeordnet.

Das Klimaelement 1 kann sich über die gesamte Breite der Klimaeinrichtung erstrecken. Es ist aber auch möglich, das Klimaelement 1 aus einzelnen gleichen Teilen zusammenzusetzen, die jeweils an der Rückseite jedes Wandbeplankungselementes 2 befestigt sind. Das Klimaelement 1 hat schmale Wärmeleitbleche 5 (Fig. 1), die jeweils einen Abschnitt eines Rohres 6 umgreifen (Fig. 2). Das Rohr 6 wird von einem Wärmemedium durchströmt und ist vorteilhaft mäanderförmig ausgebildet. Dieses Rohr 6 hat ein Eintrittsende 7, durch das das Wärmemedium in das Rohr 6 eintritt, sowie ein Austrittsende 8. Das Rohr 6 wird durch die Wärmeleitbleche 5 gegen die Innenseite der Wandbeplankung 2 gedrückt.

Das Klimaelement 1 ist mit einem Mörtelbett 9 an der Wandkonstruktion 13 befestigt. Der Zwischenraum zwischen dem Mörtelbett 9 und der Wandbeplankung 2 ist mit Wärmeisoliermaterial 10 befüllt. Die Wärmeisolierung 10 ist im Bereich zwischen den Wärmeleitblechen 5 über Klebestellen 11 mit der Wandbeplankung 2 verbunden. Da die Wärmeisolierung 10 mit der Wandbeplankung 2 nur verklebt ist, bleibt die Verbindung der Wärmeleitbleche 5 mit der Wandbeplankung 2 mechanisch entkoppelt. Dadurch können sich keine Spannungen auf die Wandbeplankung 2 übertragen. Außerdem entstehen an der Wandoberfläche keine Risse. Das Mörtelbett 9 hat nur geringe Dicke und erstreckt sich vorteilhaft über die ganze Fläche der Wärmeisolierung 10. Sie hat Vertiefungen 3 zur Aufnahme der Wärmeleitbleche 5 und des Rohres 6, die durch die Wärmeisolierung gegen die Innenseite der Wandbeplankung 2 gedrückt werden. Die Wärmeleitbleche 5 und das Rohr 6 werden nicht gesondert an der Wandbeplankung 2 befestigt.

Der untere Rand der Wandbeplankung 2 hat Abstand von einer horizontalen plattenförmigen Auflage 12. Sie kann beispielsweise der Fußboden in einem Raum, der Boden einer Terrasse oder eines Balkons und dergleichen sein.

Da das Rohr 6 an der Rückseite der Wandbeplankung 2 vorgesehen ist, kann der Durchflußquerschnitt des Rohres 6 groß sein, so daß eine große Menge des Wärmemediums durchströmen kann. Der große Leitungsquerschnitt ergibt nur einen geringen Druckverlust im Leitungssystem. Die Wärmeleitbleche 5 mit dem Rohr 6, der Wärmeisolierung 10 und der Wandbeplankung 2 lassen sich nach dem Errichten der Wand 13 problemlos anbringen.

Das Wärmemedium ist vorteilhaft warmes Wasser, das die Wärme an die Wandbeplankung 2 abgibt, die ihrerseits die Wärme an den zu erwärmenden Raum abstrahlt.

Unterhalb des Klimaelementes 1 befindet sich an der Rückseite der Wand 13 eine Anschlußleiste 14, die beispielsweise durch eine U-förmige Profilleiste gebildet ist. Sie liegt mit ihrem Steg 15 an der Innenseite der Wand 13 an. Mit ihrem einen horizontalen Schenkel 16 liegt die Anschlußleiste 14 auf der Auflage 12 auf. Der obere horizontale Schenkel 17 ist am freien Ende nach oben abgewinkelt und trägt mit diesem abgewinkelten Ende die Wandbeplankung 2. Sie deckt die Wärmeisolierung 10 an der von der Wand 13 abgewandten Seite ab und ist an ihrem unteren Ende mit einer Nut 19 versehen, in die das abgewinkelte Schenkelende eingreift. Das Rohr 6 ragt durch Öffnungen im horizontalen Schenkel 17 der Anschlußleiste 14 nach unten.

Die nebeneinander liegenden Klimaelemente 1 können aufgrund der Nut 19 am unteren Rand ihrer Wandbeplankung 2 einfach in Flucht zueinander ausgerichtet werden. Nach der Befestigung der Klimaelemente 1 an der Wand 13 können die Rohre 6 bequem angeschlossen werden. Abschließend kann die Anschlußleiste 14 durch eine Blende 20 geschlossen werden, die reversierbar an der Anschlußleiste angebracht wird. Bei Bedarf kann die Blende 20 einfach abgenommen werden, so daß der Anschluß der Rohre 6 bequem zugänglich ist.

Bei dieser Ausführungsform kann das Mörtelbett 9 entfallen, da das Klimaelement 1 mit den Befestigungselementen 4 an der Wand 13 befestigt wird.

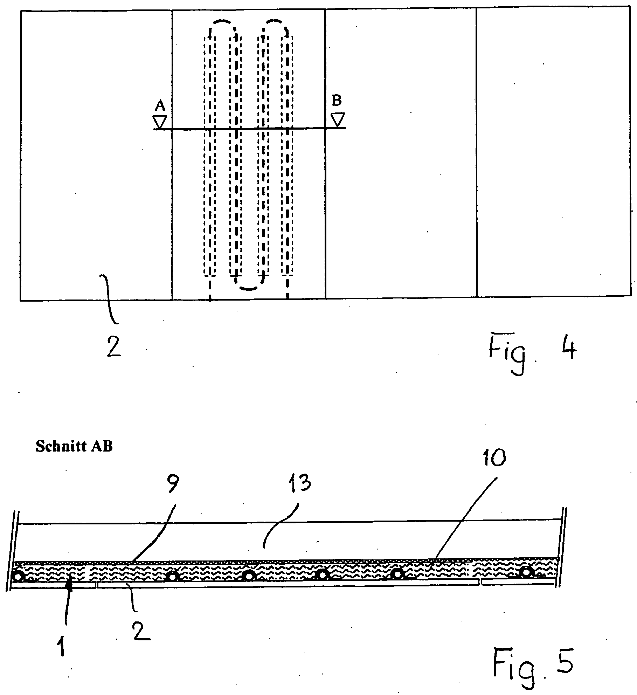

Die Ausführungsform gemäß den Fig. 4 und 5 unterscheidet sich vom vorigen Ausführungsbeispiel lediglich dadurch, daß das Klimaelement 1 ausschließlich mit dem Mörtelbett 9 an der Wandkonstruktion 13 befestigt wird. Auf die Befestigungselemente 4 kann somit verzichtet werden. Das Mörtelbett deckt die Wärmeisolierung 10 des Klimaelementes 1 an der Rückseite vollständig ab. Unterhalb des Klimaelementes 1 kann der Abschlußsockel 14 vorgesehen sein, der gleich ausgebildet ist wie beim vorigen Ausführungbeispiel. Es ist aber auch möglich, auf diesen Abschlußsockel 14 zu verzichten. Das Klimaelement 1 kann dann Abstand von der Auflage 12 haben. Das Klimaelement 1 kann aber auch so ausgebildet sein, daß es auf der Auflage 12 aufliegt.

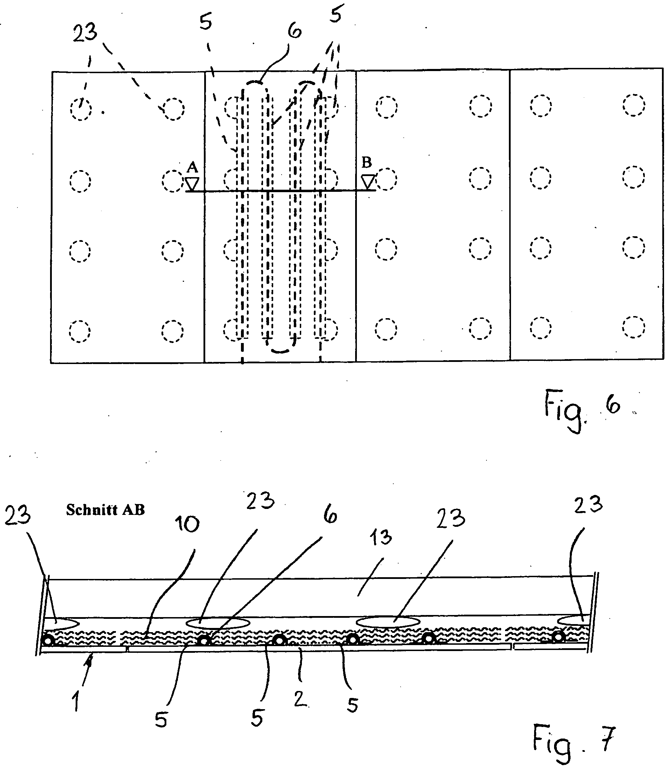

Die Fig. 6 und 7 zeigen ein Ausführungsbeispiel, bei dem die Wandbeplankung 2 durch einzelne dünne Platten gebildet wird, die beispielsweise Gipsfaserplatten sind. An der Rückseite der Wandbeplankung 2 sind die Wärmeleitbleche 5 in der beschriebenen Weise gehalten, die die geraden Abschnitte des mäanderförmigen Rohres 6 übergreifen. Die Wärmeleitbleche 5 sind gleich ausgebildet wie beim vorigen Ausführungsbeispiel und liegen im Isoliermaterial 10, das die Wärmeleitbleche 5 mit dem Rohr 6 vollständig überdeckt. Das Klimaelement 1 wird im Unterschied zum vorigen Ausführungsbeispiel nicht durch ein flächiges Mörtelbett, sondern durch punktuell aufgetragene Mörtelbatzen 23 an der Wand bzw. Wandkonstruktion 13 befestigt. Die Mörtelbatzen 23 sind, wie Fig. 6 zeigt, über die Fläche der Wandbeplankung 2 verteilt angeordnet, so daß das Klimaelement 1 zuverlässig befestigt ist. Das Klimaelement 1 selbst ist entsprechend dem vorherigen Ausführungsbeispiel ausgebildet. Auch bei dieser Ausführungsform kann das Klimaelement 1 auf einem Abschlußsockel aufsitzen, wie anhand der Fig. 1 bis 3 beschrieben worden ist. Ein solcher Abschlußsockel kann aber auch fehlen, oder das Klimaelement 1 kann auf der Auflage 12 aufstehen.

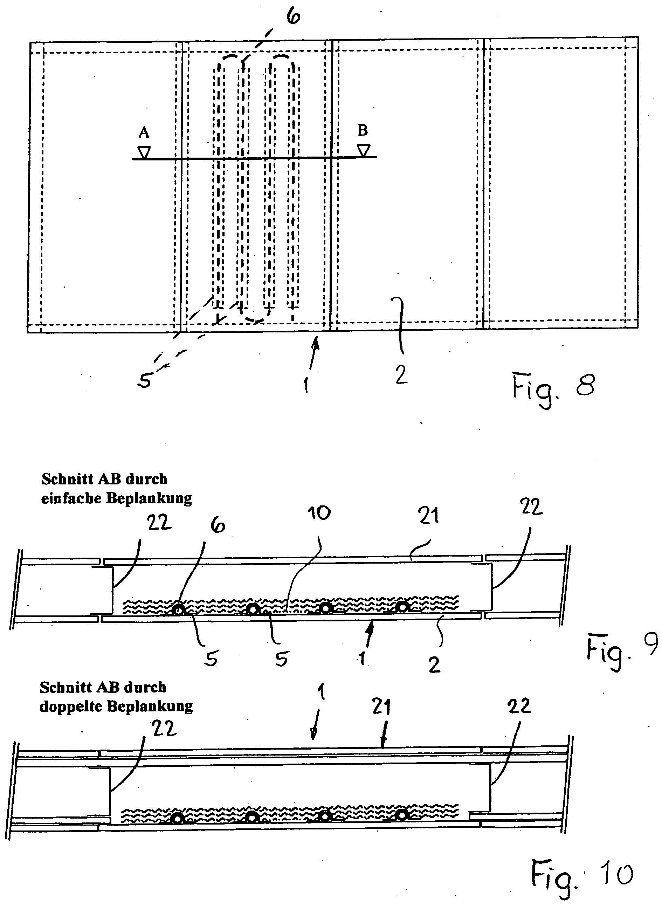

Bei der Ausführungsform nach den Fig. 8 und 9 liegt das Isoliermaterial 10, in das die Wärmeleitbleche 5 mit dem Rohr 6 entsprechend der vorigen Ausführungsform eingebettet sind, mit Abstand hinter einer Abdeckung 21 (Fig. 7). Sie liegt parallel zur vorderseitigen Wandbeplankung 2, die entsprechend den vorherigen Ausführungsformen durch dünne Platten, vorzugsweise Gipsfaserplatten, gebildet ist. Auch die Abdeckung 21 besteht aus dünnen Platten, die beispielsweise ebenfalls Gipsfaserplatten sein können. Die Platten 2, 21 sind mit ihren in Höhenrichtung verlaufenden seitenrändern an vertikalen Stützen 22 befestigt, die beispielsweise U-Schienen sind und die in vorteilhaft gleichen Abständen hintereinander liegen. Die Klimaelemente 1 liegen im wesentlichen zwischen den Stützen 22, die durch die Wandbeplankung 2 und die Abdeckung 21 im wesentlichen abgedeckt sind.

Beim Ausführungsbeispiel nach Fig. 10 ist die Abdeckung 21 doppellagig ausgebildet. Sie besteht aus zwei aufeinanderliegenden Schichten von Platten, von denen die äußeren Platten versetzt zu den inneren Platten liegen können. Die inneren Platten sind entsprechend der vorigen Ausführungsform an den Stützen 22 befestigt, während die äußeren Platten der Abdeckung 21 auf den inneren Platten in geeigneter Weise befestigt sind. Mit einem solchen Klimaelement 1 kann eine doppelt beplankte Ständerwand gebildet werden.

Das Klimaelement 1 kann bei den beschriebenen Ausführungsbeispielen als Ständerelement auf der Auflage 12 aufgebracht werden, die beispielsweise auch eine Unterkonstruktion sein kann. Das Klimaelement 1 kann als Heizelement ausgebildet, wenn durch das Rohr 6 warmes Medium, vorzugsweise warmes Wasser, strömt. Das Klimaelement 1 kann aber auch zur Kühlung des Raumes eingesetzt werden. In diesem Falle strömt durch das Rohr 6 ein Kühlmedium, beispielsweise kaltes Wasser.

Anstelle des Mörtelbetts 9 bzw. der Mörtelbatzen 23 kann auch ein geeignetes Klebemittel verwendet werden.

Das Klimaelement 1 kann auch im Deckenbereich und/oder im Bodenbereich des Raumes angeordnet sein. Dann nimmt das Klimaelement 1 um 90° verdrehte Lage ein. Es kann auch frei im Raum aufgestellt oder an einer Brüstung, einer Wand oder dgl. angebracht werden. Das Wandelement 2 bzw. die Wandbeplankung bildet je nach Aufstellort der Klimaeinrichtung ein Dekkenelement, ein Bodenelement usw.

## Patentansprüche

1. Klimaeinrichtung mit mindestens einem Klimaelement (1), das wenigstens ein Abstrahlelement (2) und wenigstens ein Rohr (6) aufweist, das von einem Wärmemedium, vorzugsweise Wasser, durchströmt und an der Rückseite des Abstrahlelementes (2) gehalten ist, und mit Wärmeisoliermaterial (10) hinter dem Abstrahlelement (2), wobei das Wärmeisoliermaterial (10) Vertiefungen (3) zur Aufnahme des Rohres (6) aufweist, das unter Zwischenlage eines Wärmeleitelementes (5) in der Vertiefung (3) liegt,
**dadurch gekennzeichnet, dass** das Wärmeleitelement (5) das Rohr (6) gegen die Innenseite des Abstrahlelementes (2) drückt, und dass das Wärmeleitelement (5) vom Abstrahlelement (2) mechanisch entkoppelt ist.

2. Klimaeinrichtung nach Anspruch 1,
**dadurch gekennzeichnet, dass** das Wärmeisoliermaterial (10) zwischen dem Abstrahlelement (2) und einer Wandkonstruktion (13) liegt.

3. Klimaeinrichtung nach Anspruch 1 oder 2,
**dadurch gekennzeichnet, dass** das Klimaelement (1) auf einem Abschluss (14) aufliegt.

4. Klimaeinrichtung nach Anspruch 3,
**dadurch gekennzeichnet, dass** in den vorteilhaft mit wenigstens einem Reversierelement (20) versehenen Abschluss (14) das Rohr (6) ragt.

5. Klimaeinrichtung nach Anspruch 3 oder 4,
**dadurch gekennzeichnet, dass** der Abschluss (14) wenigstens ein vorteilhaft U-förmig ausgebildetes Profilelement, vorzugsweise eine Profilschiene, aufweist.

6. Klimaeinrichtung nach einem der Ansprüche 3 bis 5,
**dadurch gekennzeichnet, dass** das Abstrahlelement (2) formschlüssig mit dem Abschluss (14) verbunden und vorzugsweise mit einer Nut (19) versehen ist, in die der Abschluss (14) mit einem Formschlussteil (17) eingreift.

7. Klimaeinrichtung nach einem der Ansprüche 1 bis 6,
**dadurch gekennzeichnet, dass** das Wärmeisoliermaterial, (10) hinter wenigstens einer vorzugsweise wenigstens einlagig ausgebildeten Abdeckwand (21) liegt.

8. Klimaeinrichtung nach Anspruch 7,
**dadurch gekennzeichnet, dass** die Abdeckwand (21) an stehend angeordneten Stützen (22) befestigt ist, zwischen denen vorteilhaft das Klimaelement (1) befestigt ist.

9. Klimaeinrichtung nach einem der Ansprüche 1 bis 8,
**dadurch gekennzeichnet, dass** das Abstrahlelement (2) eine Platte ist.

10. Klimaeinrichtung nach einem der Ansprüche 2 bis 9,
**dadurch gekennzeichnet, dass** das Klimaelement (1) an die Wandkonstruktion (13) angeschraubt ist.

11. Klimaeinrichtung nach einem der Ansprüche 2 bis 9,
**dadurch gekennzeichnet, dass** das Klimaelement (1) mit einem Mörtelbett (9) an der Wandkonstruktion (13) befestigt ist.

12. Klimaeinrichtung nach einem der Ansprüche 2 bis 9,
**dadurch gekennzeichnet, dass** das Klimaelement (1) punktuell an der Wandkonstruktion (13) befestigt ist.

13. Klimaeinrichtung nach einem der Ansprüche 1 bis 12,
**dadurch gekennzeichnet, dass** das Abstrahlelement (2) eine Decken-, Boden- oder Wandbeplankung ist.

14. Klimaeinrichtung nach einem der Ansprüche 1 bis 13,
**dadurch gekennzeichnet, dass** das Klimaelement (1) im Raum frei aufstellbar ist.

15. Klimaeinrichtung nach einem der Ansprüche 1 bis 14,
**dadurch gekennzeichnet, dass** das Klimaelement (1) an einer Brüstung, an einer Wand und dgl. angebracht ist.

## Claims

1. An air-conditioning system with at least one air-conditioning element (1), which has at least one emission element (2) and at least one pipe (6), through which a heat medium, preferably water, flows and which is held on the rear side of the emission element (2), and having heat-insulating material (10) behind the emission element (2), wherein the heat-insulating material (10) has depressions (3) for accommodating the pipe (6), which lies in the depression (3) with interposition of a heat-conducting element (5),
**characterised in that** the heat-conducting element (5) presses the pipe (6) against the inside of the emission element (2), and **in that** the heat-conducting element (5) is mechanically decoupled from the emission element (2).

2. The air-conditioning system according to Claim 1,
**characterised in that** the heat-insulating material (10) lies between the emission element (2) and a wall structure (13).

3. The air-conditioning system according to Claim 1 or 2,
**characterised in that** the air-conditioning element (1) rests on an end (14).

4. The air-conditioning system according to Claim 3,
**characterised in that** the pipe (6) protrudes into the end (14), which is advantageously provided with at least one reversing element (20).

5. The air-conditioning system according to Claim 3 or 4,
**characterised in that** the end (14) has at least one profile element, preferably a profile rail, which is advantageously of U-shaped construction.

6. The air-conditioning system according to one of Claims 3 to 5,
**characterised in that** the emission element (2) is connected to the end (14) in a positive-fitting manner and preferably provided with a groove (19), into which the end (14) engages by way of a positive-fitting part (17).

7. The air-conditioning system according to one of Claims 1 to 6,
**characterised in that** the heat-insulating material (10) lies behind at least one covering wall (21), which is preferably of single-layer construction.

8. The air-conditioning system according to Claim 7,
**characterised in that** the covering wall (21) is fastened on supports (22), which are arranged in an upright manner and between which the air-conditioning element (1) is preferably fastened.

9. The air-conditioning system according to one of Claims 1 to 8,
**characterised in that** the emission element (2) is a plate.

10. The air-conditioning system according to one of Claims 2 to 9,
**characterised in that** the air-conditioning element (1) is screwed onto the wall structure (13).

11. The air-conditioning system according to one of Claims 2 to 9,
**characterised in that** the air-conditioning element (1) is fastened on the wall structure (13) by way of a mortar bed (9).

12. The air-conditioning system according to one of Claims 2 to 9,
**characterised in that** the air-conditioning element (1) is fastened on the wall structure (13) in a punctiform manner.

13. The air-conditioning system according to one of Claims 1 to 12,
**characterised in that** the emission element (2) is ceiling, floor or wall panelling.

14. The air-conditioning system according to one of Claims 1 to 13,
**characterised in that** the air-conditioning element (1) can be installed freely in space.

15. The air-conditioning system according to one of Claims 1 to 14,
**characterised in that** the air-conditioning element (1) is attached on a parapet, on a wall and the like.

## Revendications

1. Système de conditionnement d'air comprenant au moins un élément de climatisation (1) qui présente au moins un élément radiant (2) et au moins un tube (6) qui est traversé par un fluide thermique, de préférence de l'eau, et est fixé au dos de l'élément radiant (2), et comprenant un matériau isolant contre la chaleur (10) derrière l'élément radiant (2), sachant que le matériau isolant contre la chaleur (10) présente des creux (3) pour recevoir le tube (6) qui repose dans le creux (3) par un élément thermoconducteur (5) intercalé,
**caractérisé en ce que** l'élément thermoconducteur (5) appuie le tube (6) contre la face intérieure de l'élément radiant (2) et que l'élément thermoconducteur (5) est découplé mécaniquement de l'élément radiant (2).

2. Système de conditionnement d'air selon la revendication 1,
**caractérisé en ce que** le matériau isolant contre la chaleur (10) repose entre l'élément radiant (2) et une construction murale (13).

3. Système de conditionnement d'air selon la revendication 1 ou 2,
**caractérisé en ce que** l'élément de climatisation (1) repose sur une terminaison (14).

4. Système de conditionnement d'air selon la revendication 3,
**caractérisé en ce que** le tube (6) dépasse dans la terminaison (14) dotée avantageusement d'au moins un élément inverseur (20).

5. Système de conditionnement d'air selon la revendication 3 ou 4,
**caractérisé en ce que** la terminaison (14) présente au moins un élément profilé formé avantageusement en U, de préférence un rail profilé.

6. Système de conditionnement d'air selon l'une des revendications 3 à 5,
**caractérisé en ce que** l'élément radian (2) est relié par engagement positif avec la terminaison (14) et est doté de préférence d'une rainure (19) dans laquelle la terminaison (14) s'engage avec une pièce d'engagement positif (17).

7. Système de conditionnement d'air selon l'une des revendications 1 à 6,
**caractérisé en ce que** le matériau isolant contre la chaleur (10) est placé derrière au moins une paroi de couverture (21) conçue de préférence au moins d'une seule couche.

8. Système de conditionnement d'air selon la revendication 7,
**caractérisé en ce que** la paroi de couverture (21) est fixée sur des supports (22) disposés à la verticale, entre lesquels l'élément de climatisation (1) est avantageusement fixé.

9. Système de conditionnement d'air selon l'une des revendications 1 à 8,
**caractérisé en ce que** l'élément radian (2) est une plaque.

10. Système de conditionnement d'air selon l'une des revendications 2 à 9,
**caractérisé en ce que** l'élément de climatisation (1) est vissé à la construction murale (13).

11. Système de conditionnement d'air selon l'une des revendications 2 à 9
**caractérisé en ce que** l'élément de climatisation (1) est fixé par lit de mortier (9) à la construction murale (13).

12. Système de conditionnement d'air selon l'une des revendications 2 à 9,
**caractérisé en ce que** l'élément de climatisation (1) est fixé ponctuellement à la construction murale (13).

13. Système de conditionnement d'air selon l'une des revendications 1 à 12,
**caractérisé en ce que** l'élément radian (2) est un placage de plafond, de sol ou de mur.

14. Système de conditionnement d'air selon l'une des revendications 1 à 13,
**caractérisé en ce que** l'élément de climatisation (1) peut être posé librement dans la pièce.

15. Système de conditionnement d'air selon l'une des revendications 1 à 14,
**caractérisé en ce que** l'élément de climatisation (1) est posé sur un garde-corps, sur un mur et similaire.
